Europäisches Patentamt

European Patent Office

Office européen des brevets

(11) Numéro de publication: **0 047 703**

**B1**

(12) **FASCICULE DE BREVET EUROPEEN**

(45) Date de publication du fascicule du brevet: **13.02.85**

(51) Int. Cl.⁴: **B 60 N 1/06**

(21) Numéro de dépôt: **81401394.2**

(22) Date de dépôt: **07.09.81**

(54) **Dispositif de réglage en hauteur pour sièges de véhicules.**

(30) Priorité: **08.09.80 FR 8019352**

(43) Date de publication de la demande:
**17.03.82 Bulletin 82/11**

(45) Mention de la délivrance du brevet:
**13.02.85 Bulletin 85/07**

(84) Etats contractants désignés:
**BE DE GB IT LU NL SE**

(56) Documents cités:
**DE-A-2 255 122**
**FR-A-2 158 976**
**FR-A-2 172 689**
**FR-A-2 262 610**
**GB-A- 585 196**

(73) Titulaire: **A. & M. Cousin et Cie**
**Le Bois de Flers**
**F-61103 Flers Orne (FR)**

(72) Inventeur: **Cousin, Maurice**
**78, rue Abbé-Lecornu**
**F-61100 Flers, Orne (FR)**
Inventeur: **Pipon, Yves**
**"La Garenne"**
**F-61100 St-Georges-Des-Groseillers (FR)**
Inventeur: **Droulon, Georges**
**"La Garenne"**
**F-61100 St-Georges-Des-Groseillers (FR)**

(74) Mandataire: **Madeuf, Claude Alexandre Jean**
**et al**
**CABINET MADEUF 3, avenue Bugeaud**
**F-75116 Paris (FR)**

Courier Press, Leamington Spa, England.

## Description

La présente invention a pour objet un dispositif pour le réglage en hauteur de sièges de véhicules dont la conception nouvelle permet un faible encombrement en épaisseur ce qui permet la mise en place de ce dispositif entre l'armature du siège et la partie basse de la carrosserie. De plus, les pièces sont particulièrement résistantes assurant ainsi une bonne sécurité de l'ensemble constitué par ce dispositif et les glissières permettant le réglage longitudinal du siège.

Le dispositif, conforme à l'invention, permet soit le réglage en hauteur de la partie arrière ou avant seulement du siège du véhicule soit, dans une variante, le réglage de la partie arrière et de la partie avant du siège mais, dans ce cas, on règle soit la partie arrière d'abord, puis la partie avant ensuite, soit au contraire la partie avant d'abord et la partie arrière ensuite.

On connaissait déjà des mécanismes permettant la réhausse de siège mais ces dispositifs comportaient des montages donnant des efforts en porte-à-faux qui détérioraient rapidement les pièces principales du dispositif et ne permettaient pas de ce fait, la fixation des ceintures de sécurité directement sur les armatures de sièges.

On connaît notamment de FR—A—2,172,689 un dispositif de réglage dans lequel une pièce articulée maintenue par une pièce intermédiaire solidaire de la partie supérieure coulissante d'une glissière de réglage longitudinale d'un siège est maintenue en position choisie par une pièce dentée, solidaire du même axe que la pièce par l'intermédiaire d'un grain denté coulissant et bloqué par une came rotative actionnée par une transmission à leviers soumise à l'action d'un organe élastique assurant automatiquement le retour de la came on position de blocage du grain lorsqu'aucune pression n'est exercée sur la transmission à leviers, le grain présentant des dents coopérant avec les dents de la pièce solidaire par l'axe de la pièce articulée supportant l'arrière de l'armature du siège considéré. L'invention concerne un tel dispositif et est caractérisée en ce que le grain est situé dans le même plan que la came rotative dans un espace constitué par un logement prévu dans une aile de la pièce intermédiaire et un évidement opposé prévu dans la pièce dentée, les dents de cette dernière étant prévues sur un bord dudit évidement.

Diverses autres caractéristiques de l'invention ressortent d'ailleurs de la description détaillée qui suit.

Des formes de réalisation de l'objet de l'invention sont représentées, à titre d'exemples, aux dessins annexés.

La fig. 1 est une élévation, partie en coupe, d'une première forme de réalisation permettant seulement le réglage de la partie arrière du siège de véhicule, la position de l'avant de l'assise étant invariable en hauteur.

La fig. 2 est une élévation arrière du dispositif de la fig. 1.

La fig. 3 est un plan correspondant à la fig. 1 mais montrant les deux dispositifs indépendants utilisés pour le réglage en hauteur d'un siège.

La fig. 4 est une élévation latérale d'une deuxième forme de réalisation de l'invention.

La fig. 5 est une élévation de face partielle correspondant à la fig. 4.

La fig. 6 est une vue en plan, partie en coupe, de la fig. 4.

La fig. 7 est une élévation partielle, à grande échelle, d'un détail de la fig. 4.

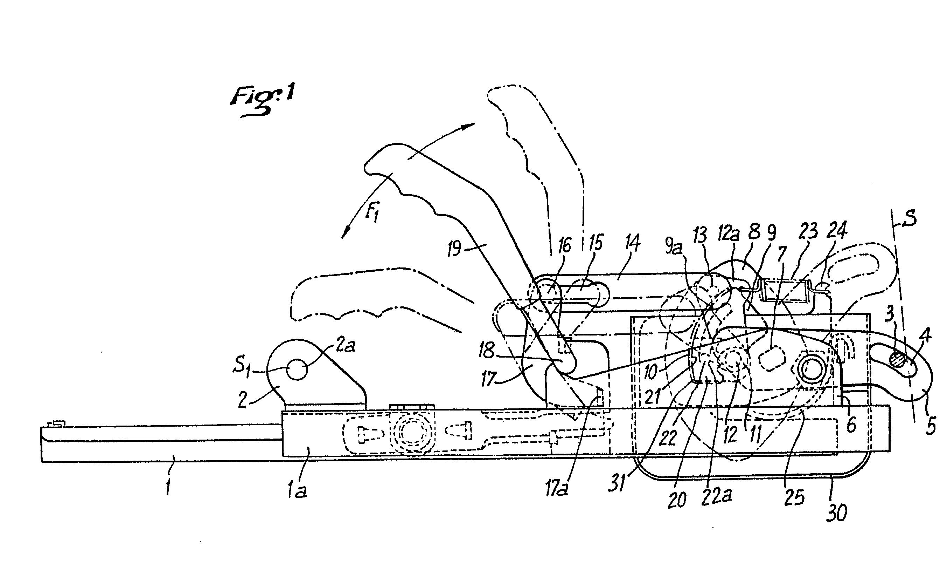

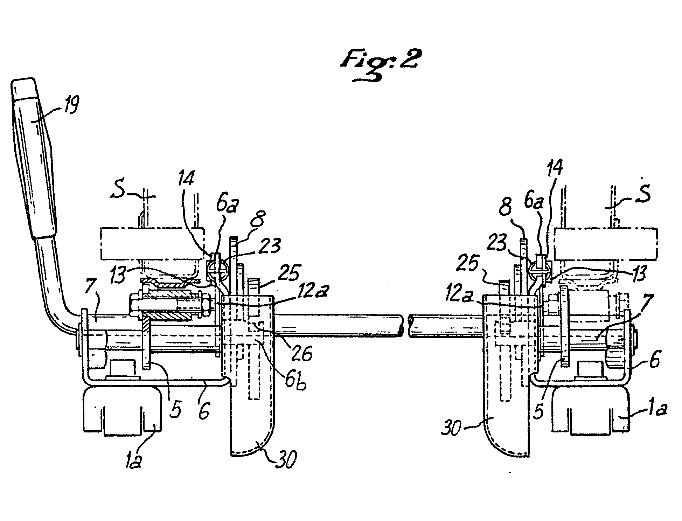

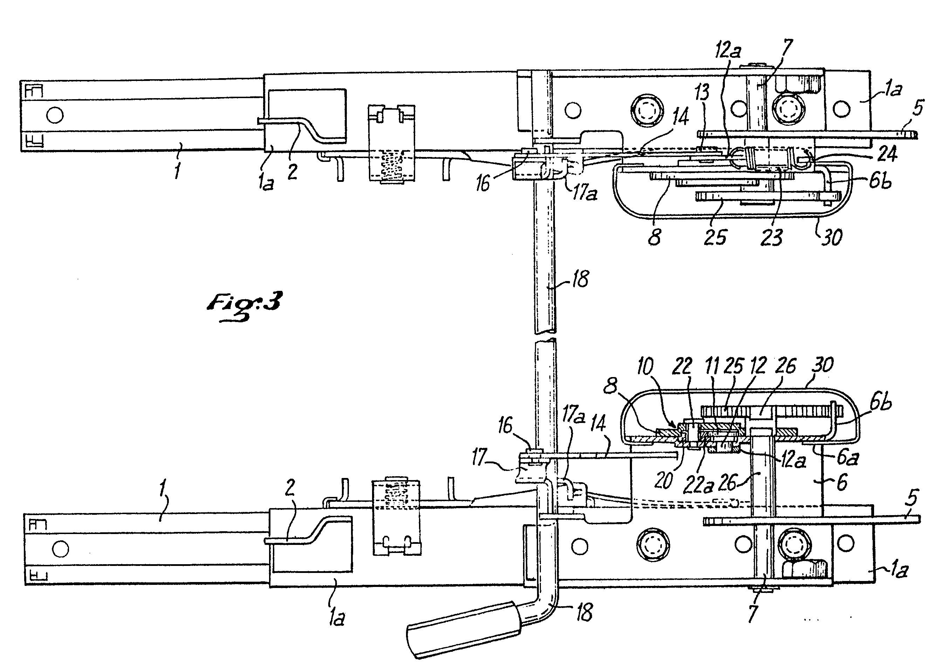

A la fig. 1 on a représenté schématiquement une glissière longitudinale 1 d'un type connu en soi permettant de positionner dans le sens longitudinal un siège de véhicule S d'automobile qui est schématiquement représenté par une barre S1 aussi bien à l'avant qu'à l'arrière.

La partie supérieure coulissante 1a de la glissière 1 porte, par l'intermédiaire d'une équerre 2, la partie avant basse de l'assise du siège. Cette dernière comporte, à sa partie arrière, un axe sensiblement horizontal 3 qui est placé à l'intérieur d'une boutonnière 4 percée dans une pièce oblongue 5.

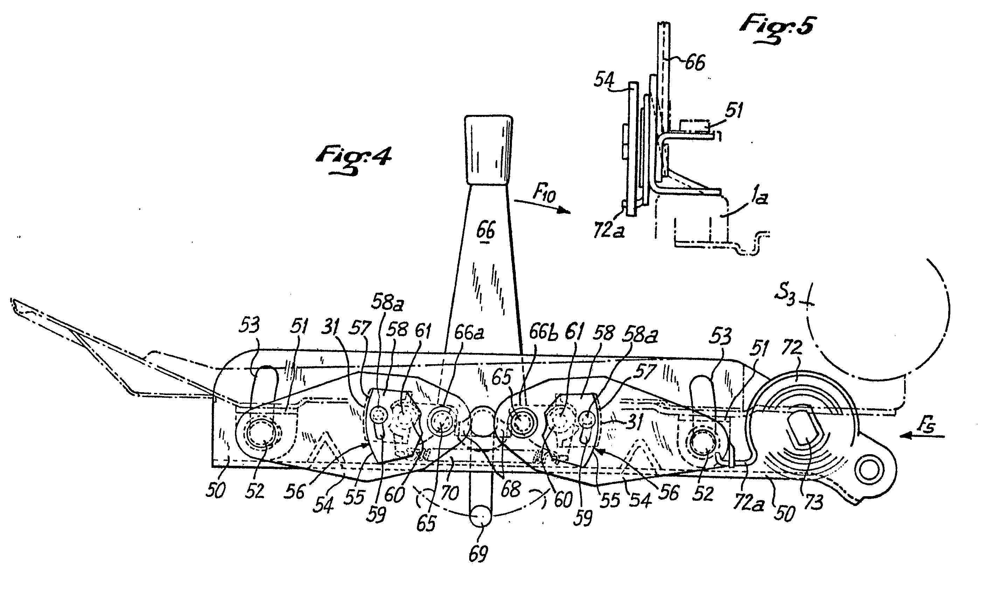

Comme cela est visible aux fig. 1 et 2, une pièce 6 en U est fixée sur la partie mobile 1a de la glissière 1. Cette pièce 6 porte un axe central 7 sur lequel est fixée la pièce oblongue 5 et également une pièce 8 en forme d'éventail qui présente un évidement central 9 dont le bord intérieur 9a est muni de dents 10.

Le bord interne 9a de l'évidement central 9 est en contact avec un grain 20 portant sur sa face avant des dents 21 engrenant avec les dents 10 de la pièce 8 en forme d'éventail. Le grain 20 est normalement repoussé sur la pièce 8 par une came 11 montée sur un axe 12 solidaire d'une aile 6a de la pièce 6. De plus, l'axe porte un levier 12a dont la partie supérieure est liée sur un axe 13 à un levier 14 dont l'extrémité avant présente une lumière 15 dans laquelle passe un axe 16 solidaire d'une pièce 17 en L montée sur l'axe 18 d'un levier de manoeuvre 19.

L'extrémité inférieure 17a de la pièce 17 en L est destinée à coopérer avec la commande de déverrouillage et de verrouillage de la glissière longitudinale 1 d'une manière connue en soi et qui ne fait pas partie de la présente invention.

Comme on peut le voir à la fig. 1 le grain 20, présentant sur sa face avant la denture 21, peut légèrement coulisser d'avant en arrière et d'arrière en avant en étant guidé dans un logement de l'aile 6a et par l'intermédiaire d'un petit axe 22 pouvant légèrement se déplacer dans une petite fenêtre 22a du logement présité. Finalement, le maintien du grain 20 contre la pièce 8 est obtenu du fait du ressort 23 accroché à la partie supérieure du levier 12 et également sur un crochet 24 solidaire de la partie supérieure de la pièce 6 en U.

Aux fig. 1 et 3 on voit un ressort 25 enroulé sur une zone 26 solidaire de la pièce 6 et prenant appui sur l'extrémité 6*b* de la pièce 6.

Le dispositif fonctionne de la façon suivante. Lorsqu'on abaisse le levier 19 dans le sens de la flèche $F_1$ (fig. 1), le mouvement fait pivoter la pièce 17 en L et tire le levier 14.

Le levier 12*a* pivote dans le même sens ainsi que la came 11. Ce mouvement, qui a lieu contre la force de rappel du ressort 23, provoque la rotation de la came 11 et donc la libération du grain 20 qui est repoussé par un petit ressort 31 dont la denture 21 quitte les dents 10 de la pièce 8 en forme d'éventail. Celle-ci étant libre, l'axe 7 est également libre ainsi que la pièce oblongue 5, on peut donc facilement faire mouvoir la pièce 5, mouvement qui est facilité pour le relevage de l'arrière par le ressort 25 qui est accroché en 6*b*.

Pour l'abaissement de l'arrière, le mouvement de la pièce 5 est facilité par l'utilisateur qui s'appuie sur l'assise et le dossier pour vaincre la force du ressort (25 pour les fig. 1—2—3 et 72 pour les fig. 4 et 6).

Ainsi se trouve changée la position en hauteur du siège jusqu'à une position donnant au passager un maximum de confort puisque l'avant du siège pivote sur l'axe 2*a* solidaire de l'équerre 2.

Toutes les positions intermédiaires arrière sont possibles entre les dents 10 les plus basses et les plus hautes de la pièce en éventail 8 puisque les limites maximum et minimum sont données par ces dents qui coopèrent avec les dents 21 du grain coulissant 20.

Lorsque la position choisie est trouvée, il suffit de relâcher le levier de manoeuvre 19 qui revient automatiquement en arrière dans la position représentée à la fig. 1 en traits pleins. En effet, ce retour est provoqué par la détente du ressort 23 qui tire en arrière le levier 12, le levier 14 et par là le levier de manoeuvre 19. La came 11 reprend alors la position représentée à la fig. 1, repousse en bloquant le grain 20 dont les dents 21 pénètrent dans les dents 10 de la pièce en éventail 8. L'axe arrière du siège est de nouveau bloqué. La boutonnière 4 évite tout blocage de l'axe 3 du siège.

Si l'on manoeuvre le levier 19 dans le sens contraire à la flèche $F_1$, le bec 17*a* déverrouille alors la partie supérieure de la glissière 1 et l'on peut régler, à volonté, la position longitudinale du siège. Comme cela est visible aux fig. 2 et 3, les mécanismes de verrouillage susdécrits et qui sont placés sur chaque glissière du siège $S_1$ sont commandés simultanément par l'axe 18. De plus, des capots 30 protègent ces mécanismes soue le siège S considéré.

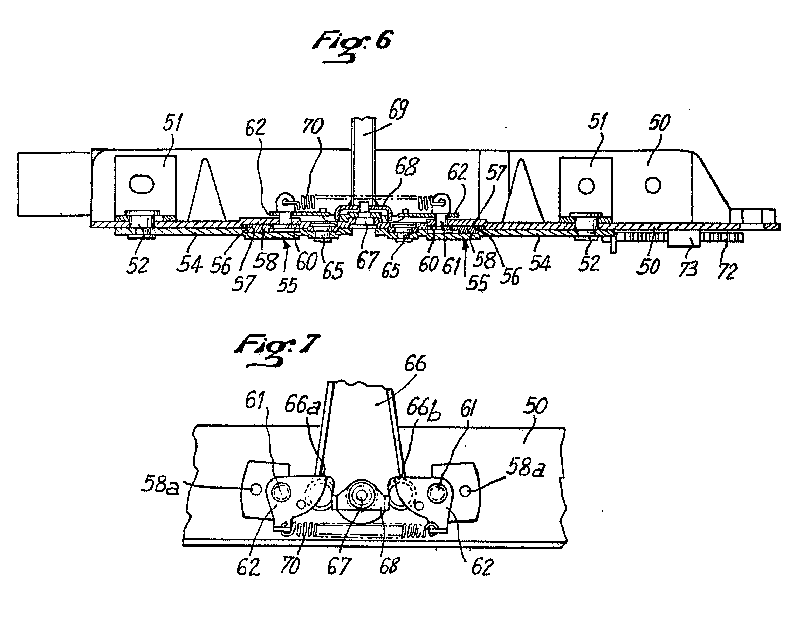

Les fig. 5, 6, 7 représentent une deuxième variante du mécanisme de l'invention dans lequel ou peut régler à volonté tantôt la hauteur de l'avant du siège, tantôt la hauteur de l'arrière du siège en permettant ainsi une plus grande variété de positions.

A la fig. 4 on voit une pièce 50 à section en L et de forme longue qui est solidaire par des moyens non représentés de la partie supérieure coulissante 1*a* d'une glissière 1 de réglage longitudinal d'un siège de véhicule. La pièce 50 est percée de lumières arguées 53, comme cela est visible en particulier à la fig. 4, et des axes 52 les traversent pour maintenir des équerres 51 sur lesquelles est fixée l'armature du siège $S_3$. Les axes 52 sont solidaires également de pièces 54 ayant sensiblement le forme d'un losange. Une demi-découpe 55 est pratiquée dans chaque pièce 54 et cette 1/2 découpe 55 comporte une denture 56 qui coopère avec la denture 57 d'un grain 58. Chaque grain 58 est solidaire d'un petit axe 58*a* qui peut coulisser dans une petite lumière courbe 59 percée dans la 1/2 découpe 55. Ainsi, chaque axe 58*a* peut évoluer en hauteur dans cette petite courbe d'une position maximum à une position minimum. Finalement, chaque grain 58 est guidé, d'une part, par la pièce 50 et, d'autre part, par la pièce 54 puisqu'il est inséré entre ces deux éléments (voir fig. 6). La partie arrière de chaque grain 58 coopère avec une came 60 montée sur un axe 61 qui porte également une pièce 62 en coeur. Comme le montre la fig. 4, chaque pièce 54 en forme de losange est articulée sur un axe 65 solidaire de la pièce 50. Finalement, un levier de manoeuvre 66 est articulé sur un axe 67 fixé également sur la pièce 50, cet axe portant une pièce en cavalier 68 solidaire d'une traverse 69 dont le rôle sera expliqué plus loin. Il est remarqué que les parties inférieures 66*a*, 66*b* du levier 66 permettent la manoeuvre soit de la pièce 62 en coeur de la partie gauche, soit la manoeuvre de la pièce 62 en coeur de la partie droite.

Un ressort de tension 70 relie les pièces en coeur 62 à leur partie inférieure. Ce ressort, en agissant sur les pièces 62 en forme de coeur, repousse les dentures 57 des grains 58 sur les dentures 56 des pièces 54 par l'intermédiaire des cames 60. Finalement, un ressort de très forte tension 72, monté sur un axe 73 solidaire de la pièce 50, tend à soulever l'équerre arrière 51 par son extrémité 72*a*.

Lorsqu'on désire régler la hauteur arrière d'un siège, on fait pivoter le levier de manoeuvre 66 dans le sens de la flèche $F_{10}$ (fig. 4) ce qui a pour effet de faire pivoter la pièce 62 en coeur de droite mais est sans action sur la pièce 62 en coeur de gauche; le pivotement de la pièce en coeur de droite a pour action de faire pivoter, en même temps, la came 60 de droite en dévorrouillant ainsi le grain 58 de droite.

A ce moment, la pièce 54 de droite est libre, elle peut pivoter autour de l'axe 65 de droite de façon que l'axe 52 de droite portant l'équerre 51 de droite se déplace vers le haut dans la lumière arquée 53 de droite sous l'action du gros ressort 72 ce qui permet le réglage de l'arrière vers le haut. Pour régler l'assise vers le bas, le mouvement de l'équerre 51 de droite dans la lumière arquée (53) de droite est facilité par l'utilisateur assis et qui appuie sur l'assise et sur le dossier pour vaincre le ressort (25 pour les fig. 1—2—3 ou 72 pour les fig. 4 et 6). En relâchant le levier 66 lorsque la position arrière désirée du siège est atteinte, l'ensemble des organes du dispositif de réglage reprend sa place et verrouille l'ensemble sous l'action du ressort 70. Dans le cas du réglage en hauteur de la partie avant du siège, la manoeuvre du levier 66 vers l'avant a pour effet de faire une action sur la pièce en coeur 62 de gauche et sans action sur la pièce en coeur 62 de droite. Suivant le même processus qu'à l'arrière, lorsque la pièce 54 de gauche est libérée, l'axe 52 de gauche portant l'équerre 51 de gauche se déplace dans la lumière arquée 53 de gauche. Pour abaisser la partie avant du siège, le poids de l'utilisateur assis sur le siège provoque l'abaissement de l'avant ou l'appui sur le dossier de l'utilisateur assis sur le siège provoque la montée de l'avant du siège. En relâchant le levier 66, lorsque la position avant désirée du siège est atteinte, l'ensemble des organes du dispositif de réglage reprend sa place et verrouille l'ensemble sous l'action du ressort 70.

Comme les dentures 56 des pièces 54 sont suffisamment fines et longues, on peut avoir un réglage très progressif de la position en hauteur de l'avant et de l'arrière du siège entre un point mort bas et un point mort haut avant et un point mort bas et un point mort haut arrière.

Comme le montre en partie la fig. 6, chaque siège est équipé de deux dispositifs indépendants placés de part et d'autre du siège, audessus de la glissière de réglage longitudinale, la commande de ces dispositifs étant simultanée du fait de la barre de liaison 69 sus-indiquée.

Le relevage arrière de chaque rehausse d'un même siège est indépendant ce qui permet de dissocier les deux rehausses donc de favoriser leur manutention et leur transport. Les efforts dus à l'action du système de relevage arrière (25 ou 72) sont internes à chaque rehausse ce qui permet de fixer les rehausses sur les glissières et le siège sans avoir à vaincre les efforts du système de relevage d'où une plus grande facilité de manutention et une sécurité accrue pour le personnel chargé du montage.

Les deux réalisations qui viennent d'être décrites permettent l'emploi de glissières dont la résistance est suffisante pour la mise en place de la ceinture de sécurité sur ces glissières, le dispositif de réglage en hauteur ne gênant pas cette installation.

Les constructions conformes aux fig. 1 et suivantes ainsi qu'aux fig. 5 et suivantes présentent l'avantage qu'il n'y a pas de réaction de blocage sur les axes 7 et 65 car il n'y a pas de poussées sur ces derniers pendant les réglages en hauteur du siège considéré. En utilisant sur les pièces dentées 8, 20 et 55, 58 des dents de toute petite taille, on obtient un réglage très fin des positions du siège considére.

## Revendication

Dispositif de réglage en hauteur pour sièges de véhicules dans lequel une pièce articulée (5) maintenue par une pièce intermédiaire solidaire de la partie supérieure coulissante d'une glissière de réglage longitudinale d'un siège est maintenue en position choisie par une pièce dentée (8), solidaire du même axe que la pièce articulée (5) par l'intermédiaire d'un grain donté (20) coulissant et bloqué par une came rotative (11) actionnée par une transmission à leviers (12, 14, 17, 19) soumise à l'action d'un organe élastique (23) assurant automatiquement le retour de la came (11) en position de blocage du grain (20) lorsqu'aucune pression n'est exercée sur la transmission à leviers (14, 17, 19), le grain (20) présentant des dents (21) coopérant avec les dents (10) de la pièce dentée (8) solidaire par l'axe de la pièce articulée (5) supportant l'arrière de l'armature du siège considéré, caractérisé en ce que le grain (20 ou 58) est situé dans le même plan que la came rotative (11 ou 60) dans un espace constitué par un logement prévu dans une aile de la pièce intermédiaire (6 ou 50) et un évidement opposé (9 ou 55) prévu dans la pièce dentée (8 ou 54), les dents (21 ou 56) de cette dernière étant situées sur un bord dudit évidement (9 ou 55).

## Patentanspruch

Vorrichtung zur Hohenverstellung für Fahrzeugsitze, bei welcher ein angelenktes Teil (5), das von einem fest mit dem gleitbar beweglichen Oberteil einer Schiene zur Längsverstellung eines Sitzes verbundenen Zwischenteil gehalten ist, in der gewählten Stellung von einem Zahnteil (8) gehalten ist, welches über eine Gleitpfanne (20) mit Zähnung fest mit derselben Achse wie das angelenkte Teil (5) verbunden ist, wobei die Gleitpfanne über einen drehbaren Nocken (11) feststellbar ist, welcher über ein Gestänge (14, 17, 19) betätigbar ist, auf welches ein elastisches Teil (23) einwirkt, welches automatisch die Rückführung des Nockens (11) in die Stellung sicherstellt, in welcher die Pfanne (20) festgestellt ist, wenn das Gestänge (14, 17, 19) mit keinerlei Druck beaufschlagt ist, wobei die Pfanne (20) Zähne (21) aufweist, welche mit den Zähnen (10) des verzahnten Teiles (8) kämmen, das über die Achse des angelenkten Teiles formschlüssig angesetzt ist, wobei das angelenkte Teil die Rückseite der Beschläge des entsprechenden Sitzes trägt, dadurch gekennzeichnet, dass die Gleitpfanne (20 oder 58) in derselben Ebene wie der drehbare Nocken (11 oder 60) liegt, und zwar in einem Raum, der durch eine in einem Seitenteil des Zwischenteils (6 oder 50) vorgesehene ausgesparte Aufnahmestelle und eine entgegengesetzte, in dem verzahnten Teil (8 oder 54) vorgesehene Ausnehmung (9 oder 55) gebildet ist, wobei die Zähnung (21 oder 56) der letzteren am Rand der betreffenden Ausnehmung (9 oder 55) angeordnet ist.

## Claim

Height adjustment device for vehicle seats in which an articulated part (5) maintained by an intermediary part integrally mounted onto the upper sliding part of a slider for longitudinally adjusting a seat is maintained in a chosen position by a toothed part (8), integrally mounted onto the same axis as the articulated part (5) by means of a sliding toothed bearing plate (20) locked by a rotating cam (11) operated by a lever transmission (12, 14, 17, 19) biased by a resilient member (23) providing automatically the return of the cam (11) in the locking position of the bearing plate (20) when no pressure is exerted on the lever transmission (14, 17, 19), the bearing plate (20) having teeth (21) cooperating with the teeth (10) of the toothed part (8) integrally mounted by the axis of the articulated part (5) supporting the rear part of the frame of the seat in question, characterized in that the bearing plate (20 or 58) is placed in the same plane as the rotating cam (11 or 60) in a space formed by a housing provided in a wing of the intermediary part (6 or 50) and an opposed recess (9 or 55) provided in the toothed part (8 or 54), the teeth (21 or 56) of the latter being positionned on an edge of said recess (9 or 55).

*Fig.1*

*Fig. 2*

Fig.3

0 047 703

Fig.4

Fig.5

*Fig. 6*

51 62 70 69 68 62 57 51 50

52 54 56 57 55 58 60 65 67 65 60 61 58 55 56 54 52 50 73 72

*Fig. 7*

66

61 66a 66b 61 50

58a 58a

62 70 67 68 62

0 047 703